# EUROPEAN PATENT APPLICATION

(11) **EP 4 234 104 A1**
(43) Date of publication of application: **30.08.2023**
(21) Application number: 22159248.8
(22) Date of filing: 28.02.2022
(51) Int. Cl.: B05C 17/005, A61C 5/64, B05C 17/01, B65D 81/32, B65D 83/00

(54) **CARTRIDGE ASSEMBLY FOR INSERTION INTO A DISPENSER AND DISPENSER FOR DISPENSING MATERIALS**

(71) Applicant: medmix Switzerland AG, 9469 Haag (Rheintal) (CH)
(72) Inventor: BODENMUELLER, Tobias, 88097 Eriskirch (DE); THUTEWOHL, Sarah, 9472 Grabs (CH); DEGENDORFER, Carsten, 8032 Zürich (CH)
(74) Representative: Manitz Finsterwald Patent- und Rechtsanwaltspartnerschaft mbB

(57) **Abstract**

The invention relates to a cartridge assembly (10) for insertion into a dispenser (40) comprising a collapsible cartridge (12) having a film cartridge wall (14) and an outlet (16), with said film wall bounding a cartridge chamber for material to be dispensed, said chamber extending along a longitudinal axis of the cartridge, and the collapsible cartridge further comprising a first end having a head part (18) with the outlet for dispensing said material being formed at the head part; a support sleeve (20) comprising a rigid sleeve wall forming a receiving area configured to receive the collapsible cartridge, the support sleeve further comprising first and second ends and a support sleeve axis extending therebetween; the support sleeve comprises two half shells (22) connectable with one another to form said support sleeve and the receiving area therebetween or the support sleeve further comprises connection means (30) configured to releasably fix the collapsible cartridge inside its respective receiving area of the support sleeve, in particular by connecting the support sleeve with the dispensing head.

## Description

The invention relates to a cartridge assembly for insertion into a dispenser and a dispenser for dispensing materials configured to repeatedly receive a cartridge assembly according to the invention.

Dispensers are used to dispense various types of materials in various fields of application. Cartridges are frequently used to store liquid flowable, frequently pasty or viscous to highly viscous substances, such as paints, sealants and adhesives in the industrial sector, for example the automotive, nautical and aeronautical industries, in the construction industry, for example of buildings and structures, such as bridges, and also in the dental sector and medical sector.

Various types of dispensers are available to dispense materials for the respective application as required. Examples for such substances are joint sealing compounds, compounds for chemical dowels or chemical anchors, adhesives, pastes or impression materials in the dental sector. These cartridges are usually produced from plastic and are manufactured in an injection molding process.

A distinction is made between single-component systems in which the material to be dispensed is only made of one component and two-component or multicomponent systems in which at least two different components are stored in separate chambers of the same cartridge or in separate cartridges, wherein the components are intimately mixed on dispensing by means of a dynamic or static mixing apparatus. Examples for this are two-component adhesives or chemical dowels which only harden after the mixing of the two components. Two-component systems are in particular also used in the industrial sector for paints which are often used to generate functional protective layers such as for corrosion protection.

For reasons of environmental protection, film bag cartridges are increasingly being used. In contrast to regular cartridges which are completely produced from plastic in an injection molding process, at least parts of film cartridges are designed as a film. Usually the cartridge wall(s) bounding the cartridge chamber(s) is/are made of a film which is connected to a head part made of rigid material, e.g. plastic, comprising the dispensing outlet. This has several advantages. On the one hand, the unfilled film cartridges can be stored and transported in a collapsed state from the cartridge manufacturers to the manufacturers of the filling materials (media) who then take care of the filling of the empty cartridges. Only after being filled, the film cartridge is in its expanded state which is comparable in size to a regular non-collapsible cartridge. This means that the necessary space for storage and for transportation can be reduced, since the collapsed cartridges have a reduced size in comparison to regular non-collapsible cartridges.

On the other hand, once the cartridges have been used, i.e. reduced to the collapsed state by dispensing the filling material, the cartridges are significantly reduced in size and weight in comparison to regular cartridges so that the cost of disposal is also reduced. In any case the carbon footprint associated with the film cartridges is reduced in comparison to plastic cartridges that are completely formed in an injection molding process.

The materials are stored in cartridges and these can be repeatedly replaced at the dispensers once the materials stored therein are either no longer required for a certain application or have been used up.

As in application fields such as the medical or dental sectors, the dispensers and thus also the collapsible cartridges used are comparatively small, it is often difficult to change the cartridges effectively without mistakenly rupturing them.

Additionally, especially in the above mentioned application fields, extremely high quality and hygiene standards are demanded. Thus, it is also necessary to being able to effectively clean and sanitize the dispensers after every use, especially after every patient.

In view of the above it is an object of the invention to provide a cartridge assembly for insertion into a dispenser that is simple to use with film bag cartridges, which reduces waste on removal of film bag cartridges. It is a further object of the invention to provide a corresponding dispenser that can be used with a cartridge assembly according to the invention, thereby enabling a particularly simple handling.

This object is satisfied by the subject matter of the independent claims.

A cartridge assembly for insertion into a dispenser according to the invention comprises a collapsible cartridge having a film cartridge wall and an outlet, with said film wall bounding a cartridge chamber for material to be dispensed, said chamber extending along a longitudinal axis of the cartridge, and the collapsible cartridge further comprising a first end having a head part with the outlet for dispensing said material being formed at the head part. The cartridge assembly further comprises a support sleeve comprising a rigid sleeve wall forming a receiving area configured to receive the collapsible cartridge, the support sleeve further comprising first and second ends and a support sleeve axis extending therebetween. The invention is characterized in that the support sleeve comprises two half shells connectable with one another to form said support sleeve and the receiving area therebetween.

Such a cartridge assembly is suitable for a variety of dispenser applications. Furthermore, the amount of waste can be reduced dramatically as the rigid support sleeve does not have to be replaced once a cartridge is empty. On the contrary, the support sleeve can be used repeatedly since only the collapsible cartridges need to be replaced once they are empty. Therefore, with the cartridge assembly according to the invention it is possible to reduce the amount of waste.

Furthermore, by providing a support sleeve formed of two half shells that can be connected to one another it is particularly simple to replace empty cartridges as the half shells can simply be disconnected and thus dismantled in order to remove the cartridge from the receiving area.

Once the cartridge is replaced and the half shells of the support sleeves are again connected with one another, the whole assembly can be inserted in a suitable dispenser. Therefore, also the insertion process into a dispenser becomes easier as one does not need to insert the collapsible cartridges into their support sleeves from the rather small opening in the back or the front of the support sleeve.

Additionally, since according to the invention the support sleeve can be dismantled into its respective two parts, said two separate parts can be cleaned more easily and effectively which is particularly important in the medical and/or dental field of application.

In some embodiments the support sleeve and/or the cartridge may comprise a trumpet shape second end. A trumpet shaped second end facilitates the insertion of a piston of a dispenser into the support sleeve, since the piston is usually dimensioned such that none of the material of the collapsible cartridge is caught between the support sleeve and the piston which could damage the film wall and hence cause the material stored therein to come into direct contact with moveable parts of the dispenser and hence possibly influence the working thereof.

Also, the shape of the second end of the cartridge and/or the second end of the support sleeve can act as an insertion aid to guide a piston of a dispenser towards the cartridge.

Moreover, through a suitable selection of the parts of the cartridge assembly, e.g. of the film bag, the head part and the support sleeve, e.g. from plastic materials, e.g. thermoplastic elastomers and/or thermoplastic polymers, this can be produced in an as environmentally friendly manner using known techniques in an as cost-effective way as possible.

It should be noted that the cartridges described herein may be a plurality of different types of cartridges, for example, one or multi-component cartridges. If e.g. a two-component cartridge is used this may be formed as a side-by-side cartridge, a coaxial cartridge or a cartridge formed by joining two single component cartridges e.g. by a "click together" process such as a snap-fit connection or the like.

In order to hold the cartridge in place at least during dispensing of the materials, it may further be possible to axially fix the cartridge to the support sleeve in a dispensing direction, for example by the support sleeve engaging with the head part of the cartridge. This way, it can be ensured that during use of the cartridge assembly the cartridge is held in place and cannot fall out of the support sleeve when, for example, a piston applies a pressure onto a second end of the cartridge, wherein said second end is arranged opposite to the first end of the cartridge.

It may also be possible that the support sleeve clamps the head part of the cartridge once the two half shells are connected with one another such that the head part is held in place until the half shells are disconnected again.

Further benefits and advantageous embodiments of the invention will become apparent from the dependent claims, from the description and from the accompanying drawings.

According to an embodiment of the invention the half shells can be connectable to one another along their respective longitudinal axis, in particular along the support sleeve axis, or along a transverse axis extending perpendicular to said longitudinal axis. In other words the support sleeve can basically be cut in half either along its longitudinal axis, which upon use of the cartridge assembly aligns with the support sleeve axis, or along its transverse axis. In the latter case the two half shells can be disconnected by moving the two shells away from one another along their longitudinal axis.

It may further be possible that the support sleeve further comprises fixing means configured to releasably fix the half shells to one another, with said fixing means being one of a snap fit connection, a latching connection, a plug-in connection, a clamp connection, a hook connection and/or combinations of the foregoing. Hence, the two half shells can comprise means that allow an easy mantling and dismantling of the two half shells.

According to a further embodiment the cartridge assembly may further comprise at least one separate connection element configured to clamp the cartridge assembly. Said further connection element may thus be configured to hold some or all components of the cartridge in place upon use of the cartridge assembly.

In this connection it may further be possible that said at least one separate connection element is configured to clamp the two half shells to one another by bounding the half shells from at least three sides. That is, the connection element can prevent an unwanted dismantling of the half shells by surrounding them from at least three sides. Such a further connection element can either be used by its own or in connection with the fixing means as explained above.

The connection element can for example be at least one of a clamp, a ring, a ferrule and/or combinations of the foregoing.

According to another embodiment the connection element can further be configured to connect the head part to the support sleeve. Thus, the connection element may be configured to fix the head part of the cartridge in at least an axial direction such that upon used of the cartridge assembly in a dispenser the collapsible cartridge is prevented from being pushed out of the support sleeve in a dispensing direction.

It may further be possible that one of the cartridge and the support sleeve comprises a piston configured to urge the material to be dispensed towards the outlet during dispense.

In the case of the cartridge comprising the piston, the piston is usually discarded together with the cartridge once said cartridge needs to be replaced. This enables a particularly easy handling.

In the case of the support sleeve comprising the piston, it may be possible that the piston is reusable such that upon replacement of the cartridge the piston remains inside the support sleeve. On the one hand, this option may lead to a slightly more difficult handling than the first case. On the other hand, the amount of waste can be reduced even more as the piston can be reused.

According to another embodiment the support sleeve may further comprise connection means configured to releasably fix the collapsible cartridge inside its respective receiving area of the support sleeve, in particular by connecting the support sleeve with the head part. That is, in order to prevent the cartridge from falling out of the support sleeve it may be possible to provide further connection means that can hold the collapsible cartridge in place, i.e. inside its receiving area. This can for example be done by fixing means that connect the support sleeve and the head part of the collapsible cartridge with one another. Such connection means can be provided in the form of a snap fit connection, a latching connection, a plug-in connection, a clamp connection, a hook connection, a hinge and/or combinations of the foregoing

According to a further aspect a cartridge assembly for insertion into a dispenser is provided comprising a collapsible cartridge having a film cartridge wall and an outlet, with said film wall bounding a cartridge chamber for material to be dispensed, said chamber extending along a longitudinal axis of the cartridge, and the collapsible cartridge further comprising a first end having a head part with the outlet for dispensing said material being formed at the head part. The assembly further comprises a support sleeve comprising a rigid sleeve wall forming a receiving area configured to receive the collapsible cartridge, the support sleeve further comprising first and second ends and a support sleeve axis extending therebetween. The invention is characterized in that the support sleeve further comprises connection means configured to releasably fix the collapsible cartridge inside its respective receiving area of the support sleeve, in particular by connecting the support sleeve with the head part.

Since according to the invention the support sleeve further comprises connection means configured to releasably fix the collapsible cartridge inside its respective receiving space the cartridge is prevented from falling out of the support sleeve when the cartridge assembly is being used. This can be done, for example, by fixing means that connect the support sleeve and the head part of the collapsible cartridge with one another. Such connection means can be provided in the form of a snap fit connection, a latching connection, a plug-in connection, a clamp connection, a hook connection, a hinge and/or combinations of the foregoing.

According to a further aspect of the invention cartridge assembly for insertion into a dispenser is provided comprising a collapsible cartridge having a film cartridge wall and an outlet, with said film wall bounding a cartridge chamber for material to be dispensed, said chamber extending along a longitudinal axis of the cartridge, and the collapsible cartridge further comprising a first end having a head part with the outlet for dispensing said material being formed at the head part. The assembly further comprises a support sleeve comprising a rigid sleeve wall forming a receiving area configured to receive the collapsible cartridge, the support sleeve further comprising first and second ends and a support sleeve axis extending therebetween. The invention is further characterized in that the assembly further comprises a tray element configured to repeatedly receive the support sleeve.

Such a cartridge assemblies are suitable for a variety of dispenser applications. Furthermore, the amount of waste can be reduced dramatically as the rigid support sleeve does not have to be replaced once a cartridge is empty. On the contrary, the support sleeve can be used repeatedly since only the collapsible cartridges need to be replaced once they are empty. Therefore, with the cartridge assembly according to the invention it is possible to reduce the amount of waste.

In some embodiments the support sleeve and/or the cartridge may comprise a trumpet shape second end. A trumpet shaped second end facilitates the insertion of a piston of a dispenser into the support sleeve, since the piston is usually dimensioned such that none of the material of the collapsible cartridge is caught between the support sleeve and the piston which could damage the film wall and hence cause the material stored therein to come into direct contact with moveable parts of the dispenser and hence possibly influence the working thereof.

Also, the shape of the second end of the cartridge and/or the second end of the support sleeve can act as an insertion aid to guide a piston of a dispenser towards the cartridge.

Moreover, through a suitable selection of the parts of the cartridge assembly, e.g. of the film bag, the head part and the support sleeve, e.g. from plastic materials, e.g. thermoplastic elastomers and/or thermoplastic polymers, this can be produced in an as environmentally friendly manner using known techniques in an as cost-effective way as possible.

It should be noted that the cartridges described herein may be a plurality of different types of cartridges, for example, one or multi-component cartridges. If e.g. a two-component cartridge is used this may be formed as a side-by-side cartridge, a coaxial cartridge or a cartridge formed by joining two single component cartridges e.g. by a "click together" process such as a snap-fit connection or the like.

In connection with the case of the assembly comprising a tray element for repeatedly receiving the support sleeve it should be noted that said tray element can, for example, be designed as an exoskeleton that is configured to hold the support sleeve and at the same time to connect to a dispenser. Said tray element can either be formed as a single piece or can be composed of two or more elements that are fixed to one another.

Further benefits and advantageous embodiments of the invention will become apparent from the dependent claims, from the description and from the accompanying drawings.

According to an embodiment of the invention the support sleeve can further comprise two half shells connectable with one another to form said support sleeve and the receiving area therebetween.

By providing a support sleeve formed of two half shells that can be connected to one another it is particularly simple to replace empty cartridges as the half shells can simply be disconnected and thus dismantled in order to remove the cartridge from the receiving area. Once the cartridge is replaced and the half shells of the support sleeves are again connected with one another, the whole assembly can be inserted in a suitable dispenser. Therefore, also the insertion process into a dispenser becomes easier as one does not need to insert the collapsible cartridges into their support sleeves from the rather small opening in the back or the front of the support sleeve.

Additionally, since according to the invention the support sleeve can be dismantled into its respective two parts, said two separate parts can be cleaned more easily and effectively which is particularly important in the medical and/or dental field of application.

Furthermore, it may also be possible that said half shells can be connectable to one another along their respective longitudinal axis, in particular along the support sleeve axis, or along a transverse axis extending perpendicular to said longitudinal axis. That is, in other words, the support sleeve can basically be cut in half either along its longitudinal axis, which upon use of the cartridge assembly aligns with the support sleeve axis, or along its transverse axis. In the latter case the two half shells can be disconnected by moving the two shells away from one another along their longitudinal axis.

It may further be possible that the support sleeve further comprises fixing means configured to releasably fix the half shells to one another, with said fixing means being one of a snap fit connection, a latching connection, a plug-in connection, a clamp connection and/or combinations of the foregoing. Hence, the two half shells can comprise means that allow an easy mantling and dismantling of the two half shells.

According to a further embodiment the cartridge assembly may further comprise at least one separate connection element configured to clamp the cartridge assembly. Said further connection element may thus be configured to hold some or all components of the cartridge in place upon use of the cartridge assembly.

In particular it may be possible that the at least one connection element clamps the tray element such that said connection element connects the tray element and the support sleeve. In this connection it some preferred embodiments the connection element may also be configured to clamp the cartridge assembly in such a way that it additionally also keeps the cartridge from falling out of the support sleeve during use of the dispenser.

It may further be possible that said the at least one separate connection element is configured to clamp the two half shells to one another by bounding the half shells from at least three sides. That is, the connection element can prevent an unwanted dismantling of the half shells by surrounding them from at least three sides. Such a further connection element can either be used by its own or in connection with the fixing means as explained above.

The connection element can for example be at least one of a clamp, a ring, a ferrule and/or combinations of the foregoing.

It may further be possible that one of the cartridge and the support sleeve comprises a piston configured to urge the material to be dispensed towards the outlet during dispense.

In the case of the cartridge comprising the piston, the piston is usually discarded together with the cartridge once said cartridge needs to be replaced. This enables a particularly easy handling.

In the case of the support sleeve comprising the piston, it may be possible that the piston is reusable such that upon replacement of the cartridge the piston remains inside the support sleeve. On the one hand, this option may lead to a slightly more difficult handling than the first case. On the other hand, the amount of waste can be reduced even more as the piston can be reused.

According to a further embodiment of the invention the connection means is chosen from the group of snap fit connections, plug-in connections, latching connections, clamp connections, hook connections and/or combinations of the foregoing. That is, a variety of connection means can be suitable to effectively hinder the collapsible cartridge from falling out of its support sleeve upon use of the cartridge assembly.

According to another aspect of the invention a dispenser for dispensing materials is provided comprising a receptacle configured to repeatedly receive a cartridge assembly according to the invention, a rack configured to be connected to a piston and moveable through the receptacle for urging the film cartridge wall towards the dispensing outlet of the cartridge for dispensing the materials stored inside the cartridge chamber, and a trigger configured to activate the movement of the rack of the dispenser in the direction of the receptacle.

Further embodiments of the invention are described in the following description of the Figures. The invention will be explained in the following in detail by means of embodiments and with reference to the drawings in which is shown:
- Fig. 1:: a first embodiment of a cartridge assembly;
- Fig. 2:: a second embodiment of a cartridge assembly;
- Fig. 3:: a third embodiment of a cartridge assembly;
- Fig. 4:: a fourth embodiment of a cartridge assembly; and

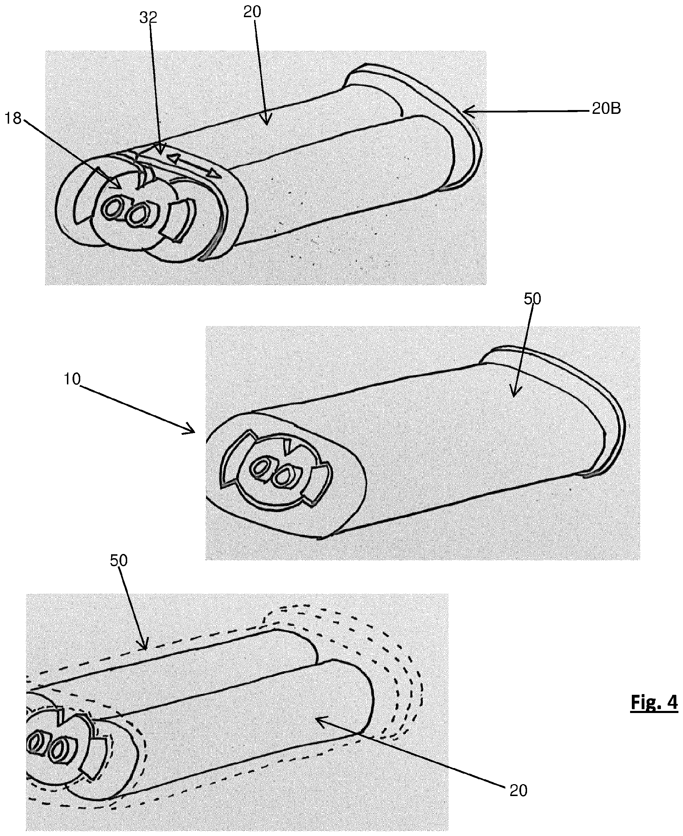

- Fig. 4:: a scheme of a dispenser.

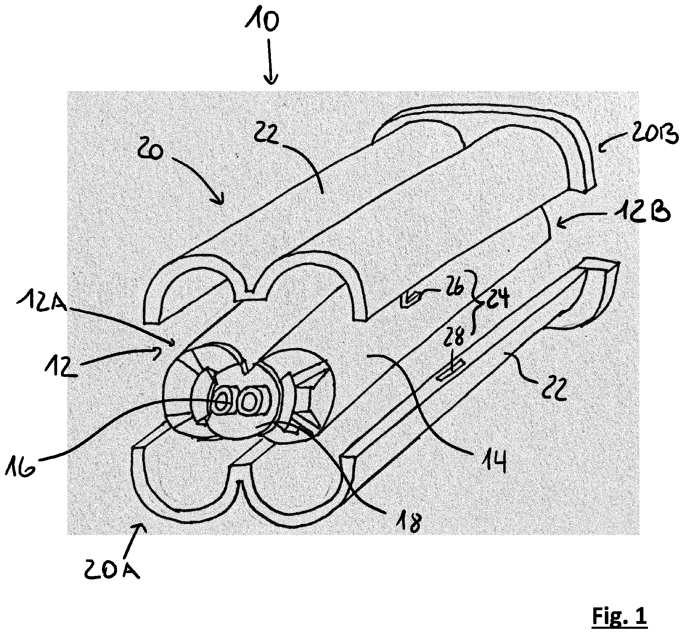

Fig. 1 shows a cartridge assembly 10 according to the invention with a collapsible cartridge 12 having a film cartridge wall 14 and an outlet 16. The outlet 16 is formed at a head part 18 of the cartridge 12. Said head part 18 is usually made out of a rigid material such as plastic.

The cartridge 12 is surrounded by a support sleeve 20 which is formed out of two half shells 22. The support sleeve 20 can also be made out of a rigid material such as plastic to be able to serve as an exoskeleton for the cartridge 12.

In the embodiment of Fig. 1 the half shells 22 can be connected to one another by fixing means 24 formed by a hook 26 and a corresponding recess 28. The fixing means 24 can also be formed by other types of connections such as a snap fit connection, a latching connection, a plug-in connection, a clamp connection and/or combinations of the foregoing, as long as said connections can opened and closed rather easily to ensure a simple and fast way of changing an empty cartridge 12.

Both the cartridge 12 and the support sleeve 20 comprise first and second ends 12A, 12B, 20A, 20B, respectively, wherein the first end 12A of the cartridge 12 aligns with the first end 20A of the support sleeve 20, and with the head part 18 of the cartridge 12 being arranged at said first end 12A of the cartridge 12. Hence, the first ends 12A, 20A of the cartridge 12 and the support sleeve 20 correspond to the dispensing end of the cartridge assembly 10, where a material stored inside the cartridge 12 is dispensed when the cartridge assembly 10 is used.

The second end 12B, 20B of the cartridge 12 and/or the support sleeve 20 can further comprise a trumpet shape. A trumpet shaped second end 12B, 20B facilitates the insertion of a piston of a dispenser 40 (see below) into the support sleeve 20, since said piston is usually dimensioned such that none of the material of the collapsible cartridge 12 is caught between the support sleeve 20 and the piston which could damage the film wall 14 and hence cause the material stored therein to come into direct contact with moveable parts of the dispenser 40 and hence possibly influence the working thereof.

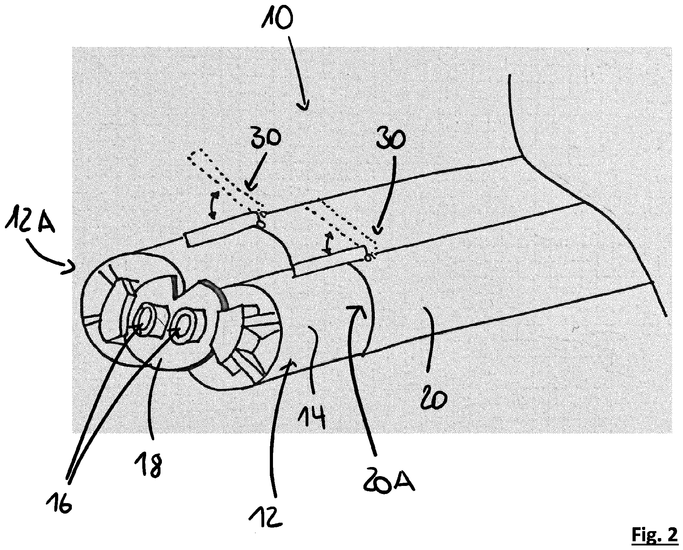

Another embodiment of the cartridge assembly 10 according to the invention is shown in Fig. 2. Fig. 2 shows a support sleeve 20 into which a cartridge 12 is not yet fully inserted. Thus, according to this embodiment the support sleeve 20 is made out of a single piece. Therefore, the cartridge 12 can be inserted into the support sleeve 20 from the front end, i.e. the first end 20A, of the support sleeve. In order embodiments (not shown) it can also be possible to load the cartridge from the back, i.e. from the second end 20B. In this case, it may be necessary to provide an additional component such as a clamp (see below), which is configured to fix the cartridge 12 inside the support sleeve 20 during use.

According to the embodiment of Fig. 2 the support sleeve 20 further comprises connection means 30 configured to releasably fix the collapsible cartridge 12 inside its respective receiving area of the support sleeve 20. To do so, the connection means 30 can connect the support sleeve 20 and the head part 18 of the cartridge 12 with one another such that the cartridge 12 can be held in place during use of the cartridge assembly 10.

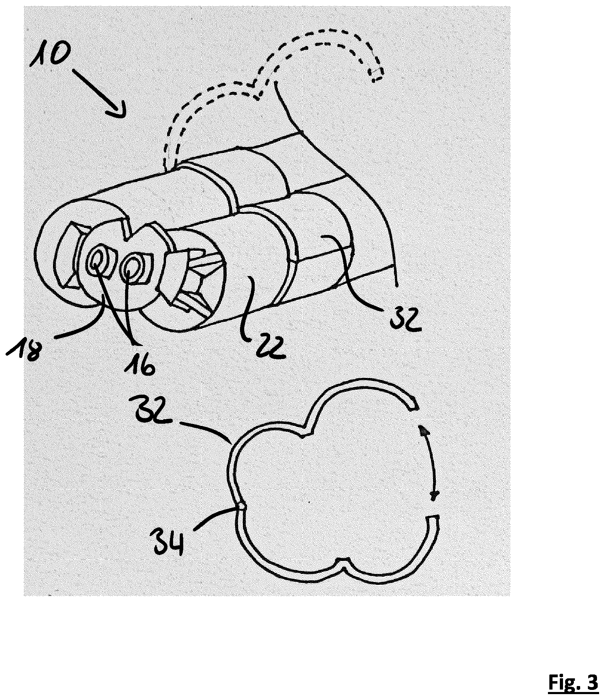

The connection means 30 shown in Fig. 3 are designed as hinges, that can swivel from an open (see dotted lines) to a closed position. In the closed position the connection means 30 can engage with the head part 18 by, for example, comprising a hook or anything the like, which is configured to connect the head part 18 to the support sleeve 20.

In general, a great variety of connection means 30 can be applied such as, for example, snap fit connections, plug-in connections, latching connections, clamp connections, hook connections and/or combinations of the foregoing. Hence, the exact type of connection means 30 can be chosen freely and/or in accordance with the precise application, e.g. in accordance with the material which is supposed to be dispensed.

In this connection it should also be noted that the embodiments of Fig. 1 and Fig. 2 can also be combined to another embodiment, where the cartridge assembly 10 comprises a support sleeve 20 that is made out of two half shells 22 and further comprises connection means 30 that fix the cartridge 12 in place by connecting with the head part 18 of the cartridge 12.

Another embodiment of the invention is shown in Fig. 3, where the cartridge assembly 10 comprises a separate connection element 32 which clamps the cartridge assembly 10 from at least three sides. In particular, the connection element 32 can be configured to clamp the two half shells 22 of the support sleeve 20 in order to support the connection of said half shells 22.

The connection element 32 can be formed in various ways, examples of which are clamps, rings, ferrules and/or combinations of the foregoing. Fig. 3 shows an eight shaped ferrule 32 comprising a joint 34 such that it can be opened and closed. In order to keep the ferrule 32 in the closed position during use, it can further comprise closure elements (not shown) configured to keep the connection element 32 in the closed position. Examples for such closure elements can be magnets, plug- connections, and/or other conventionally used elements.

The precise shape of the connection element 32 can also vary in dependence of the application. For example, a connection element 32 that is configured to clamp a side-by-side cartridge 12 as shown in Fig. 2a will rather be shaped like an eight while a connection element 32 that is designed for a single cartridge will most likely be ring-shaped.

In other examples the connection element 32 does not surround the support sleeve 20 completely. In such cases said connection element can for example be formed as a clamp. Thus, one can see that a great variety of shapes are possible.

In some embodiments (not shown) it can also be possible that the connection element 32 is arranged at the first end 20A of the support sleeve 20 such that it not only clamps the support sleeve 20 but also the head part 18 in order to fix the cartridge 12 in an axial direction during use. Hence, it can be possible that the connection element 32 can be used instead of the connection means 30 as described before. In some cases, if for example high pressures are applied to the cartridge during use, also both possibilities, i.e. the connection means 30 as well as the connection element 32, can be applied to fix the cartridge 12 in place.

In this connection it should further be noted that the embodiment of Fig. 3 could also be combined with one or both embodiments of Figs. 1 and 2.

Fig. 4 shows another embodiment of a cartridge assembly 10 according to the invention. According to the shown embodiment the cartridge assembly 10 comprises a (side-by-side) cartridge 12 (not directly visible in Fig. 4), a support sleeve 20 and a tray element 50. As one can see from Fig. 4 the tray element 50 can be designed as a cover that is configured to receive and hold the support sleeve 20. Hence, said tray element 50 may act as an additional support (see dashed lines of lower part of Fig. 4).

The tray element 50 can generally be shaped as a hollow cylinder comprising a circular or an elliptical cross section as can be seen in Fig. 4. According to further embodiments the tray element 50 can also be designed having other outer shapes and/or another cross section, such as for example generally the same shape of the support sleeve 20.

According to an alternative embodiment, the tray element 50 may also be designed as an exoskeleton, i.e. the tray element 50 may not comprise a continuous outer surface but it may rather be composed of a plurality of longitudinal and/or circumferential ribs.

The tray element 50 can further generally comprise the same or almost the same shape as the support sleeve 20 such that the support sleeve 20 can be easily covered by the tray element 50. However, in some embodiments the shape of the tray element 50 may also vary if, for example, a special outer shape or specific dimensions are needed.

That is, as can be seen in Fig. 4, the tray element 50 can also comprise a trumpet-shaped second end just like the support sleeve 20 (see in particular middle part of Fig. 4).

In the embodiment of Fig. 4 the assembly 10 further comprises a connection element 32 that clamps the support sleeve 20 and the cartridge 12 (see upper part of Fig. 4). One can also see that according to this embodiment the connection element 32 is arranged at the respective first ends 12A, 20A of the cartridge 12 and support sleeve 20, i.e. is near the head part 18 and the outlet 16 of the cartridge 12. This way, the connection element 32 may be suitable to hold the cartridge 12 inside the support sleeve 20 during use such that no further connection means, such as the ones shown in Fig. 2, are necessary.

Additionally, it could also be possible that the connection element 32 is arranged at an outer side of the tray element 50 such that it not only clamps the support sleeve 20 and the cartridge 12 but also the tray element 50.

However, generally, it may also be possible that the connection element 32 is arranged somewhere else between the first end 12A, 20A and the second end 12B, 20B of the cartridge 12 respectively the support sleeve 20.'

Therefore, generally it may also be possible that the embodiment of Fig. 4 furthermore comprises connection means 30 that is configured to connect the head part 18 of the cartridge 12 with the support sleeve 20 during use.

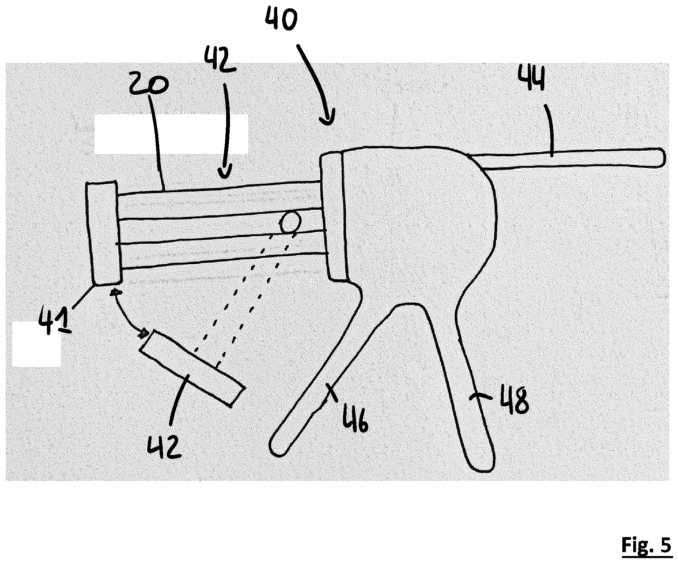

To dispense the material stored inside the cartridge 12 a dispenser 40 such as the one shown in Fig. 5 can be used. Such a dispenser 40 is configured to receive a cartridge assembly 10 according to the invention. As can be seen in Fig. 5, the dispenser 40 comprises a receiving space 42 configured to receive the cartridge assembly 10, i.e. the support sleeve 20 that is connected with the cartridge 12.

A head plate 41 is arranged at a front end of the dispenser 40 which is configured to hold the cartridge assembly 10 in axial direction during dispense. As can also be seen in Fig. 4, said front plate 41 together with the receiving space 42 can be brought into an open position (see dotted lines) that make the removal of the cartridge assembly 10, e.g. upon replacement of the cartridge 12, easier.

To dispense the material stored inside the cartridge 12 the dispenser 40 further comprises a rack 44 that is connected to a piston (not shown). Said piston can either be part of the cartridge 12 or of the support sleeve 20. By pressing the trigger 46, which is located near the handle 48 of the dispenser 40, the rack 44 moves in a forward direction towards the cartridge assembly 10 and presses the piston against the cartridge 12 such that the material stored therein is urged towards the outlet of the cartridge 12 and thus out of the dispenser.

## Claims

1. A cartridge assembly for insertion into a dispenser comprising a collapsible cartridge (12) having a film cartridge wall (14) and an outlet (16), with said film wall (14) bounding a cartridge chamber for material to be dispensed, said chamber extending along a longitudinal axis of the cartridge (12), and the collapsible cartridge (12) further comprising a first end (12A) having a head part (18) with the outlet (16) for dispensing said material being formed at the head part (18);
a support sleeve (20) comprising a rigid sleeve wall forming a receiving area configured to receive the collapsible cartridge (12), the support sleeve (20) further comprising first and second ends (20A, 20B) and a support sleeve axis extending therebetween;
**characterized in that** the support sleeve (20) comprises two half shells (22) connectable with one another to form said support sleeve (20) and the receiving area therebetween.

2. The cartridge assembly according to claim 1,
wherein the half shells (22) are connectable to one another along their respective longitudinal axis, in particular along the support sleeve axis, or along a transverse axis extending perpendicular to said longitudinal axis.

3. The cartridge assembly according to one of claims 1 or 2,
wherein the support sleeve (20) further comprises fixing means (24) configured to releasably fix the half shells (22) to one another, with said fixing means (24) being one of a snap fit connection, a latching connection, a plug-in connection, a clamp connection, a hook connection and/or combinations of the foregoing.

4. The cartridge assembly according to one of the preceding claims,
further comprising at least one separate connection element (32) configured to clamp the cartridge assembly.

5. The cartridge assembly according to claim 4,
wherein said at least one separate connection element (32) is configured to clamp the two half shells (22) to one another by bounding the half shells (22) from at least three sides.

6. The cartridge assembly according to claim 4 or 5,
wherein the connection element (32) is at least one of a clamp, a ring, a ferrule and/or combinations of the foregoing.

7. The cartridge assembly according to one of claims 4 to 6,
wherein the connection element (32) is further configured to connect the head part (18) to the support sleeve (20).

8. The cartridge assembly according to one of the preceding claims,
wherein one of the cartridge (12) and the support sleeve (20) comprises a piston configured to urge the material to be dispensed towards the outlet (16) during dispense.

9. The cartridge assembly according to one of the preceding claims,
wherein the support sleeve (20) further comprises connection means (30) configured to releasably fix the collapsible cartridge (12) inside its respective receiving area of the support sleeve (20), in particular by connecting the support sleeve (20) with the head part (18).

10. A cartridge assembly for insertion into a dispenser comprising
a collapsible cartridge (12) having a film cartridge wall (14) and an outlet (16), with said film wall (14) bounding a cartridge chamber for material to be dispensed, said chamber extending along a longitudinal axis of the cartridge (12), and the collapsible cartridge (12) further comprising a first end (12A) having a head part (18) with the outlet (16) for dispensing said material being formed at the head part (18);
a support sleeve (20) comprising a rigid sleeve wall forming a receiving area configured to receive the collapsible cartridge (12), the support sleeve (20) further comprising first and second ends (20A, 20B) and a support sleeve axis extending therebetween;
**characterized in that** the support sleeve (20) further comprises connection means (30) configured to releasably fix the collapsible cartridge (12) inside its respective receiving area of the support sleeve (20), in particular by connecting the support sleeve (20) with the head part (18).

11. A cartridge assembly for insertion into a dispenser comprising
a collapsible cartridge (12) having a film cartridge wall (14) and an outlet (16), with said film wall (14) bounding a cartridge chamber for material to be dispensed, said chamber extending along a longitudinal axis of the cartridge (12), and the collapsible cartridge (12) further comprising a first end (12A) having a head part (18) with the outlet (16) for dispensing said material being formed at the head part (18);
a support sleeve (20) comprising a rigid sleeve wall forming a receiving area configured to receive the collapsible cartridge (12), the support sleeve (20) further comprising first and second ends (20A, 20B) and a support sleeve axis extending therebetween;
**characterized in that** the assembly further comprises a tray element (50) configured to repeatedly receive the support sleeve (20).

12. The cartridge assembly according to claim 10 or 11,
wherein the support sleeve (20) further comprises two half shells (22) connectable with one another to form said support sleeve (20) and the receiving area therebetween,
in particular with said half shells (22) being connectable to one another along their respective longitudinal axis, in particular along the support sleeve axis, or along a transverse axis extending perpendicular to said longitudinal axis.

13. The cartridge assembly according to claim 12,
wherein the support sleeve (20) further comprises fixing means (24) configured to releasably fix the half shells (22) to one another, with said fixing means (24) being one of a snap fit connection, a latching connection, a plug-in connection, a clamp connection and/or combinations of the foregoing.

14. The cartridge assembly according to one of claims 10 to 13,
wherein the cartridge assembly (10) further comprises at least one separate connection (32) element configured to clamp the cartridge assembly (10).

15. The cartridge assembly according to claim 14,
wherein the connection element (32) is configured to clamp the two half shells (22) to one another by being configured to bound the half shells (22) from at least three sides, with the connection element (32) preferably being at least one of a clamp, a ring, a ferrule and/or combinations of the foregoing.

16. The cartridge assembly according to one of claims 10 to 15,
wherein one of the cartridge (12) and the support sleeve (20) comprises a piston configured to urge the material to be dispensed towards the outlet (16) during dispense.

17. The cartridge assembly according to one of claims 10 to 16,
wherein the connection means (30) is chosen from the group of snap fit connections, plug-in connections, latching connections, clamp connections, hook connections and/or combinations of the foregoing.

18. A dispenser for dispensing materials comprising a receptacle configured to repeatedly receive a cartridge assembly (10) according to one of the preceding claims,
a rack (44) configured to be connected to a piston and moveable through the receptacle (42) for urging the film cartridge wall (14) towards the dispensing outlet (16) of the cartridge (12) for dispensing the materials stored inside the cartridge chamber, and a trigger (46) configured to activate the movement of the rack (44) of the dispenser (40) in the direction of the receptacle (42).
